(19)

Europäisches
Patentamt
European
Patent Office
Office européen
des brevets

(11) **EP 2 482 126 A1**

(12) **EUROPEAN PATENT APPLICATION**
published in accordance with Art. 153(4) EPC

(43) Date of publication:
**01.08.2012 Bulletin 2012/31**

(21) Application number: **10818651.1**

(22) Date of filing: **27.08.2010**

(51) Int Cl.:
*G02F 1/1368* (2006.01)    *G02F 1/133* (2006.01)
*G02F 1/1335* (2006.01)    *G02F 1/1343* (2006.01)
*G09G 3/20* (2006.01)    *G09G 3/36* (2006.01)

(86) International application number:
**PCT/JP2010/064609**

(87) International publication number:
**WO 2011/036975 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.09.2009 JP 2009221393**

(71) Applicant: **Sharp Kabushiki Kaisha
Osaka-shi, Osaka 545-8522 (JP)**

(72) Inventors:
• **YAMASHITA, Yuki
Osaka-shi, Osaka 545-8522 (JP)**

• **SHOHRAKU, Akihiro
Osaka-shi, Osaka 545-8522 (JP)**
• **TAKEUCHI, Masanori
Osaka-shi, Osaka 545-8522 (JP)**

(74) Representative: **Müller - Hoffmann & Partner
Patentanwälte
Innere Wiener Strasse 17
81667 München (DE)**

(54)    **LIQUID CRYSTAL DISPLAY DEVICE**

(57)    In the liquid crystal display device (**100**) of this invention, pixels include m kinds of (where m is an even number and m≧4) pixels (**R, G, B** and **Y**) that display different colors. The pixels are arranged so that n of the m kinds of pixels (where n is an even number, n≦m and n is a divisor of m) are repeatedly arranged in the same order in the row direction. Each row of pixels formed by those pixels includes groups of pixels, to each of which n pixels arranged consecutively in the row direction belong. Grayscale voltages of opposite polarities are applied through associated signal lines (**13**) to the pixel electrodes (**11**) of two arbitrary adjacent pixels in each group of pixels. In two arbitrary groups of pixels that are adjacent in the row direction, grayscale voltages of opposite polarities are applied through their associated signal lines to the pixel electrodes of pixels that display the same color. The signal lines include at least one pair of adjacent signal lines (**13p**) to supply grayscale voltages of the same polarity. The source-drain capacitance of the pixels located between the pair of signal lines is smaller than that of the other pixels. The present invention can improve the display quality of a liquid crystal display device, of which each picture element is defined by an even number of pixels.

FIG.6

EP 2 482 126 A1

**Description**

**TECHNICAL FIELD**

The present invention relates to a liquid crystal display device and more particularly relates to a liquid crystal display device that conducts a display operation in colors by using four or more kinds of pixels that display mutually different colors.

**BACKGROUND ART**

Liquid crystal display devices are currently used in a variety of applications. In a general liquid crystal display device, one picture element consists of three pixels respectively representing red, green and blue, which are the three primary colors of light, thereby conducting a display operation in colors.

A conventional liquid crystal display device, however, can reproduce colors that fall within only a narrow range (which is usually called a "color reproduction range"), which is a problem. Thus, to broaden the color reproduction range of liquid crystal display devices, a technique for increasing the number of primary colors for use to perform a display operation has recently been proposed.

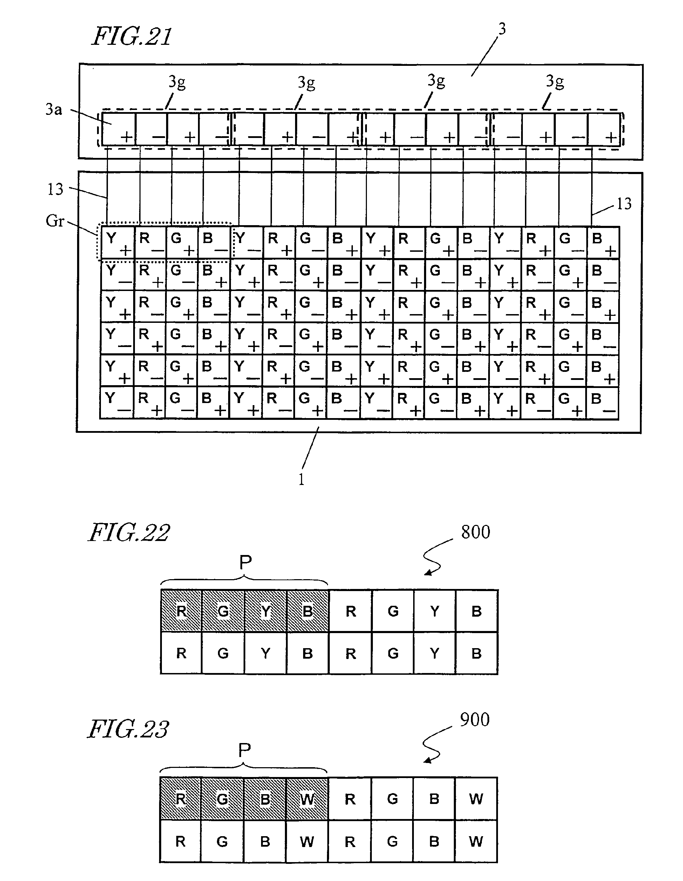

For example, Patent Document No. 1 discloses a liquid crystal display device **800** in which one picture element **P** is made up of four pixels that include not only red, green and blue pixels **R, G** and **B** representing the colors red, green and blue, respectively, but also a yellow pixel **Y** representing the color yellow as shown in FIG. **22.** That liquid crystal display device **800** performs a display operation in colors by mixing together the four primary colors red, green, blue and yellow that are represented by those four pixels **R, G, B** and **Y.**

By performing a display operation using four or more primary colors, the color reproduction range can be broadened compared to a conventional liquid crystal display device that uses only the three primary colors for display purposes. Such a liquid crystal display device that conducts a display operation using four or more primary colors will be referred to herein as a "multi-primary-color liquid crystal display device". And a liquid crystal display device that conducts a display operation using the three primary colors will be referred to herein as a "three-primary-color liquid crystal display device".

On the other hand, Patent Document No. 2 discloses a liquid crystal display device **900** in which one picture element **P** is made up of four pixels that include not only red, green and blue pixels **R, G** and **B** but also a white pixel **W** representing the color white as shown in FIG. **23.** As the pixel added is a white pixel **W,** that liquid crystal display device **900** cannot broaden the color reproduction range but can still increase the display luminance.

However, if one picture element **P** is made up of an even number of pixels as in the liquid crystal display devices **800** and **900** shown in FIGS. **22** and **23,** a so-called "horizontal shadow" phenomenon will arise and debase the display quality when a dot inversion drive operation is carried out. The dot inversion drive is a technique for minimizing the occurrence of a flicker on the display screen and is a driving method in which the polarity of the applied voltage is inverted on a pixel-by-pixel basis.

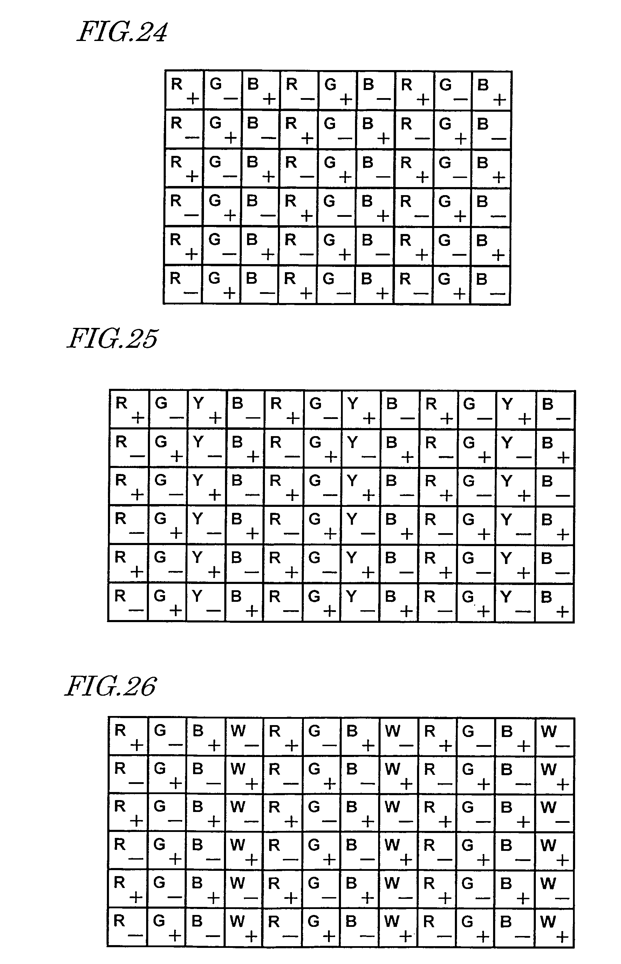

FIG. **24** shows the polarities of voltages applied to respective pixels when a dot inversion drive operation is carried out on a three-primary-color liquid crystal display device. On the other hand, FIGS. **25** and **26** show the polarities of voltages applied to respective pixels when a dot inversion drive operation is carried out on the liquid crystal display devices **800** and **900,** respectively.

In a three-primary-color liquid crystal display device, the polarities of the voltages applied to pixels in the same color invert in the row direction as shown in FIG. **24.** For example, in the first, third and fifth rows of pixels shown in FIG. **24,** the voltages applied to the red pixels **R** go positive (+), negative (-) and positive (+) in this order from the left to the right. The voltages applied to the green pixels **G** go negative (-), positive (+) and negative (-) in this order. And the voltages applied to the blue pixels **B** go positive (+), negative (-) and positive (+) in this order.

In the liquid crystal display devices **800** and **900,** on the other hand, each picture element **P** is made up of an even number of (i.e., four in this case) pixels. That is why in each and every row of pixels, the voltages applied to pixels in the same color have the same polarity everywhere as shown in FIGS. **25** and **26.** For example, in the first, third and fifth rows of pixels shown in FIG. **25,** the polarities of the voltages applied to every red pixel **R** and every yellow pixel **Y** are positive (+) and those of the voltages applied to every green pixel **G** and every blue pixel **B** are negative (-). Meanwhile, in the first, third and fifth rows of pixels shown in FIG. **26,** the polarities of the voltages applied to every red pixel **R** and every blue pixel **B** are positive (+) and those of the voltages applied to every green pixel **G** and every white pixel **W** are negative (-).

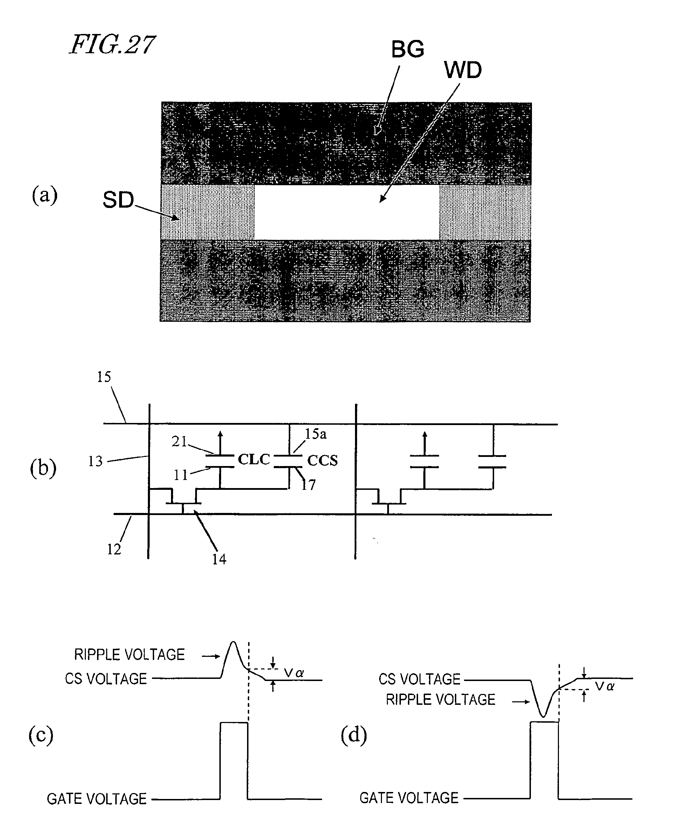

If the voltages applied to pixels in the same color come to have the same polarity anywhere in the row direction in this manner, a horizontal shadow will be cast when a window pattern is displayed in a single color. Hereinafter, it will be described with reference to FIG. **27** why such a horizontal shadow is cast.

As shown in FIG. **27(a),** when a high-luminance window **WD** is displayed on a low-luminance background **BG,** horizontal shadows **SD,** which have a higher luminance than the background to be displayed originally, are sometimes cast on the right- and left-hand sides of the window **WD.**

FIG. **27(b)** illustrates an equivalent circuit of a portion of a normal liquid crystal display device that covers two pixels. As shown in FIG. **27(b),** each of these pixels has a thin-film transistor (TFT) **14.** A scan line **12,** a signal line **13** and a pixel electrode **11** are respectively electrically connected to the gate, source and drain electrodes of the TFT **14.**

A liquid crystal capacitor $C_{LC}$ is formed by the pixel electrode **11,** a counter electrode **21** that is arranged to face the pixel electrode **11,** and a liquid crystal layer that is interposed between the pixel electrode **11** and the counter electrode **21.** Meanwhile, a storage capacitor $C_{CS}$ is formed by a storage capacitor electrode **17** that is electrically connected to the pixel electrode **11,** a storage capacitor counter electrode **15a** that is arranged to face the storage capacitor electrode **17,** and a dielectric layer (i.e., an insulating film) interposed between the storage capacitor electrode **17** and the storage capacitor counter electrode **15a.**

The storage capacitor counter electrode **15a** is electrically connected to a storage capacitor line **15** and supplied with a storage capacitor counter voltage (CS voltage). FIGS. **27 (c)** and **27 (d)** show how the CS voltage and the gate voltage change with time. It should be noted that write voltages (i.e., grayscale voltages applied to the pixel electrode **11** through the signal line **13**) have mutually different polarities in FIGS. **27(c)** and **27(d).**

When the gate voltage goes high to start charging a pixel, the potential of the pixel electrode **11** (i.e., its drain voltage) changes. In the meantime, a ripple voltage is superposed on the CS voltage by way of a parasitic capacitor between the drain and the CS as shown in FIGS. **27(c)** and **27(d).** As can be seen by comparing FIGS. **27(c)** and **27 (d),** the polarity of the ripple voltage inverts according to that of the write voltage.

The ripple voltage superposed on the CS voltage attenuates with time. If the write voltage has small amplitude (i.e., when the write voltage is applied to pixels that display the background **BG**), the ripple voltage goes substantially zero when the gate voltage goes low. On the other hand, if the write voltage has large amplitude (i.e., when the write voltage is applied to pixels that display the window **WD**), the ripple voltage becomes relatively high compared to those pixels that display the background **BG.** As a result, as shown in FIGS. **27(c)** and **27(d),** even when the gate voltage goes low, the ripple voltage superposed on the CS voltage has not quite attenuated yet. That is to say, even after the gate voltage has gone low, the ripple voltage continues to attenuate. Consequently, due to that residual ripple voltage $v\alpha$, the drain voltage (i.e., the pixel electrode potential) affected by the CS voltage varies from its original level.

On the same row of pixels, two ripple voltages of opposite polarities work to cancel each other, but two ripple voltages of the same polarity will superpose one upon the other. That is why if the voltages applied to pixels in the same color come to have the same polarity everywhere in the row direction as shown in FIGS. **25** and **26,** horizontal shadows will be cast when a window pattern is displayed in a single color.

Patent Document No. 3 discloses a technique for avoiding casting such horizontal shadows. FIG. **28** illustrates a liquid crystal display device **1000** as disclosed in Patent Document No. 3.

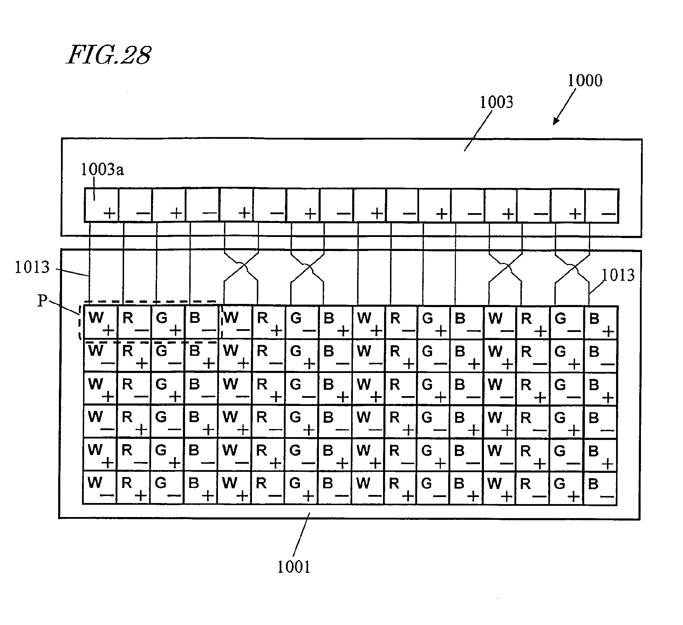

As shown in FIG. **28,** the liquid crystal display device **1000** includes an LCD panel **1001,** including a number of picture elements **P** each consisting of red, green, blue and white pixels **R, G, B** and **W,** and a source driver **1003** that supplies a display signal to multiple signal lines **1013** of the LCD panel **1001.**

The source driver **1003** includes a plurality of individual drivers **1003a,** each of which is connected to an associated one of the signal lines **1013.** Those individual drivers **1003a** are arranged side by side in the row direction. And each pair of individual drivers **1003a** that are adjacent to each other output grayscale voltages of mutually opposite polarities.

In the liquid crystal display device **1000** shown in FIG. **28,** some of those signal lines **13** are arranged in reverse order outside of the display area. For example, the fifth and sixth signal lines **1013** as counted from the left in FIG. **28** are arranged to intersect with each other outside of the display area. As a result, the fifth and sixth signal lines **1013** are connected to the sixth and fifth individual drivers **1003a,** respectively. In the liquid crystal display device **1000** with such an arrangement, grayscale voltages of mutually opposite polarities are applied to the respective pixel electrodes of two pixels that display the same color and that belong to two picture elements **P** that are adjacent to each other in the row direction. Consequently, the voltages applied to those pixels that are arranged in the row direction to display the same color do not have the same polarity, thus avoiding casting such horizontal shadows.

## CITATION LIST

### PATENT LITERATURE

Patent Document No. 1: PCT International Application Japanese National Phase Publication No. 2004-529396
Patent Document No. 2: Japanese Patent Application Laid-Open Publication No. 11-295717
Patent Document No. 3: PCT International Application Publication No. 2007/063620

## SUMMARY OF INVENTION

### TECHNICAL PROBLEM

If the technique disclosed in Patent Document No. 3 is adopted, however, particular pixels will be interposed between two signal lines **1013** that apply grayscale voltages of the same polarity. In the arrangement shown in FIG. **28,** blue pixels **B** are located between a signal line **1013** associated with their own pixel electrodes and a signal line **1013** associated with the pixel electrodes of their adjacent white pixels **W,** and the grayscale voltages supplied through these two signal lines **1013** have the same polarity. Consequently, those pixels located between the two signal lines **1013** that supply the voltages of the same polarity come to have display luminances that are no longer the original levels as will be described in detail later. As a result, the display quality will decline.

It is therefore an object of the present invention to improve the display quality of such a liquid crystal display device of which each picture element is defined by an even number of pixels.

### SOLUTION TO PROBLEM

A liquid crystal display device according to the present invention has a number of pixels, which are arranged in columns and rows to form a matrix pattern. The device includes: an active-matrix substrate that includes pixel electrodes, each of which is provided for an associated one of the pixels, a plurality of scan lines that run in a row direction, and a plurality of signal lines that run in a column direction; a counter substrate that faces the active-matrix substrate; a liquid crystal layer that is interposed between the active-matrix substrate and the counter substrate; and a signal line driver that applies a positive or negative grayscale voltage as a display signal to each said signal line. Those pixels include m kinds of (where m is an even number that is equal to or greater than four) pixels that display mutually different colors. The pixels are arranged so that n out of the m kinds of pixels (where n is an even number that is equal to or smaller than m and is a divisor of m) are repeatedly arranged in the same order in the row direction. Each of the rows of pixels that are formed by those pixels includes multiple groups of pixels, to each of which n pixels that are arranged consecutively in the row direction belong. Grayscale voltages of mutually opposite polarities are applied through associated signal lines to the pixel electrodes of two arbitrary pixels that are adjacent to each other in each said group of pixels. In two arbitrary ones of those groups of pixels that are adjacent to each other in the row direction, grayscale voltages of mutually opposite polarities are applied through their associated signal lines to the pixel electrodes of pixels that display the same color. The signal lines include at least one pair of signal lines that are adjacent to each other and that supply grayscale voltages of the same polarity. And the source-drain capacitance of the pixels that are located between the pair of signal lines is smaller than the source-drain capacitance of the other pixels.

In one preferred embodiment, when viewed along a normal to a display screen, each said pixel electrode and its associated two adjacent signal lines overlap with each other. The area where the pixel electrodes of the pixels that are located between the pair of signal lines and the two signal lines that are adjacent to those pixels overlap with each other is smaller than the area where the pixel electrodes of the other pixels and the two signal lines that are adjacent to those pixels overlap with each other.

In this particular preferred embodiment, the pixel electrode of each of the pixels that are located between the pair of signal lines has notches.

In another preferred embodiment, when viewed along a normal to a display screen, each said pixel electrode and its associated two adjacent signal lines do not overlap with each other, and the distance from the pixel electrodes of the pixels that are located between the pair of signal lines to the two signal lines that are adjacent to those pixel electrodes is longer than the distance from the pixel electrodes of the other pixels to the two signal lines that are adjacent to those pixel electrodes.

In still another preferred embodiment, the active-matrix substrate further includes shield electrodes, which are arranged in the vicinity of edges of the pixel electrode of each said pixel that is located between the pair of signal lines and which are supplied with a different voltage from the grayscale voltage applied to the pixel electrode.

In yet another preferred embodiment, the pixels include red, green and blue pixels representing the colors red, green and blue, respectively.

In a specific preferred embodiment, the pixels further include yellow pixels representing the color yellow.

In a more specific preferred embodiment, the pixels that are located between the pair of signal lines are the blue pixels.

In yet another preferred embodiment, m=n, and the pixels are arranged so that the m kinds of pixels are repeatedly arranged in the same order in the row direction.

In this particular preferred embodiment, each said group of pixels forms one picture element.

In yet another preferred embodiment, the signal line driver includes a plurality of output terminals that are arranged in the row direction, and two arbitrary adjacent ones of the output terminals output grayscale voltages of opposite polarities.

In a specific preferred embodiment, the liquid crystal display device includes connection regions where each of the signal lines is connected to an associated one of the output terminals one to one. The connection regions include a sequential connection region where an $i^{th}$ signal line (where i is a natural number) and an $i^{th}$ output terminal are connected together and reverse connection regions where a $j^{th}$ signal line (where j is a different natural number from i) and a $(j+1)^{th}$ output terminal are connected together and where a $(j+1)^{th}$ signal line and a $j^{th}$ output terminal are connected together.

In yet another preferred embodiment, the signal line driver includes a plurality of output terminals that are arranged in the row direction. The output terminals include multiple groups of output terminals, each said group including n output terminals that are arranged consecutively in the row direction. In each said group of output terminals, two arbitrary adjacent ones of the output terminals output grayscale voltages of opposite polarities. In two arbitrary ones of the groups of output terminals that are adjacent to each other in the row direction, two output terminals at the same position output grayscale voltages of opposite polarities.

## ADVANTAGEOUS EFFECTS OF INVENTION

The present invention improves the display quality of a liquid crystal display device, of which each picture element is defined by an even number of pixels.

## BRIEF DESCRIPTION OF DRAWINGS

FIG. **1** illustrates a liquid crystal display device **100** as a preferred embodiment of the present invention.

FIG. **2** is a plan view schematically illustrating a region of the liquid crystal display device **100** according to the preferred embodiment of the present invention, which is allocated to a pixel.

FIG. **3** is a cross-sectional view of the liquid crystal display device **100** according to the preferred embodiment of the present invention as viewed on the plane **3A-3A'** shown in FIG. **2.**

FIG. **4** schematically illustrates the LCD panel **1** and signal line driver **3** of the liquid crystal display device **100.**

FIGS. **5(a)** and **5(b)** show why the display quality is debased in a conventional liquid crystal display device.

FIG. **6** is a plan view schematically illustrating regions of the liquid crystal display device **100** according to the preferred embodiment of the present invention, which are allocated to four pixels that are arranged consecutively in the row direction.

FIG. **7** is a plan view schematically illustrating regions of the liquid crystal display device **100** according to the preferred embodiment of the present invention, which are allocated to four pixels that are arranged consecutively in the row direction.

FIG. **8** is a plan view schematically illustrating regions of a liquid crystal display device **200** as another preferred embodiment of the present invention, which are allocated to four pixels that are arranged consecutively in the row direction.

FIG. **9** is a plan view schematically illustrating regions of the liquid crystal display device **200** according to the preferred embodiment of the present invention, which are allocated to four pixels that are arranged consecutively in the row direction.

FIG. **10** is a plan view schematically illustrating regions of a liquid crystal display device **300** as still another preferred embodiment of the present invention, which are allocated to four pixels that are arranged consecutively in the row direction.

FIGS. **11(a)** and **11(b)** respectively illustrate, on a larger scale, the areas **A1** and **A2** that are indicated by the dashed circles in FIG. **10.**

FIG. **12** is a plan view schematically illustrating regions of a liquid crystal display device **400A** as yet another preferred embodiment of the present invention, which are allocated to four pixels that are arranged consecutively in the row direction.

FIG. **13** is a plan view schematically illustrating regions of a liquid crystal display device **400B** as yet another preferred embodiment of the present invention, which are allocated to four pixels that are arranged consecutively in the row direction.

FIG. **14** is a plan view schematically illustrating regions of a liquid crystal display device **400C** as yet another preferred embodiment of the present invention, which are allocated to four pixels that are arranged consecutively in the row direction.

FIGS. **15(a)** and **15(b)** respectively illustrate, on a larger scale, the areas **A3** and **A4** that are indicated by the dashed circles in FIG. **14.**

FIG. **16** is a plan view schematically illustrating regions of the liquid crystal display device **400A** according to yet another preferred embodiment of the present invention, which are allocated to four pixels that are arranged consecutively in the row direction.

FIG. **17** is a plan view schematically illustrating regions of the liquid crystal display device **400B** according to yet another preferred embodiment of the present invention, which are allocated to four pixels that are arranged consecutively in the row direction.

FIG. **18** illustrates a modified example of a liquid crystal display device according to a preferred embodiment of the present invention.

FIG. **19** illustrates a modified example of a liquid crystal display device according to a preferred embodiment of the present invention.

FIG. **20** illustrates a modified example of a liquid crystal display device according to a preferred embodiment of the present invention.

FIG. **21** illustrates a modified example of a liquid crystal display device according to a preferred embodiment of the present invention.

FIG. **22** schematically illustrates a conventional liquid crystal display device **800.**

FIG. **23** schematically illustrates another conventional liquid crystal display device **900.**

FIG. **24** shows the polarities of voltages applied to respective pixels when a dot inversion drive operation is carried out on a three-primary-color liquid crystal display device.

FIG. **25** shows the polarities of voltages applied to respective pixels when a dot inversion drive operation is carried out on the conventional liquid crystal display device **800.**

FIG. **26** shows the polarities of voltages applied to respective pixels when a dot inversion drive operation is carried out on the conventional liquid crystal display device **900.**

FIGS. **27(a)** to **27(d)** show how horizontal shadows are cast.

FIG. **28** schematically illustrates still another conventional liquid crystal display device **1000.**

## DESCRIPTION OF EMBODIMENTS

Hereinafter, preferred embodiments of the present invention will be described with reference to the accompanying drawings. It should be noted, however, that the present invention is in no way limited to the preferred embodiments to be described below.

(EMBODIMENT 1)

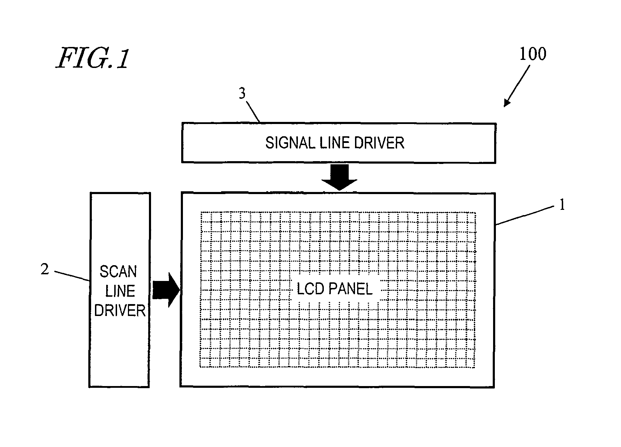

FIG. **1** illustrates a liquid crystal display device **100** as a first specific preferred embodiment of the present invention. As shown in FIG. **1,** the liquid crystal display device **100** includes an LCD panel **1** with a number of pixels that are arranged in columns and rows to form a matrix pattern, and a scan line driver (or gate driver) **2** and a signal line driver (or source driver) **3** that supply a drive signal to the LCD panel **1.**

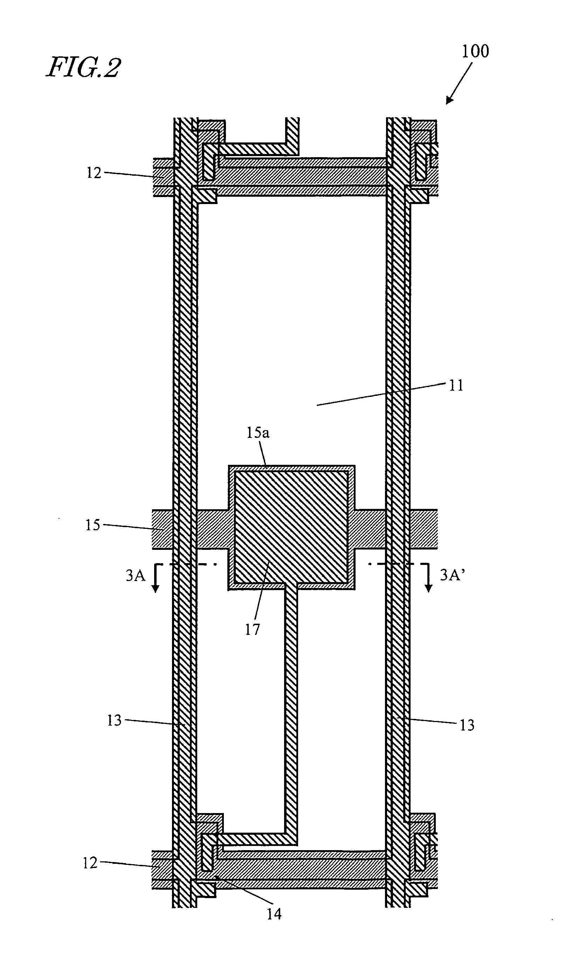

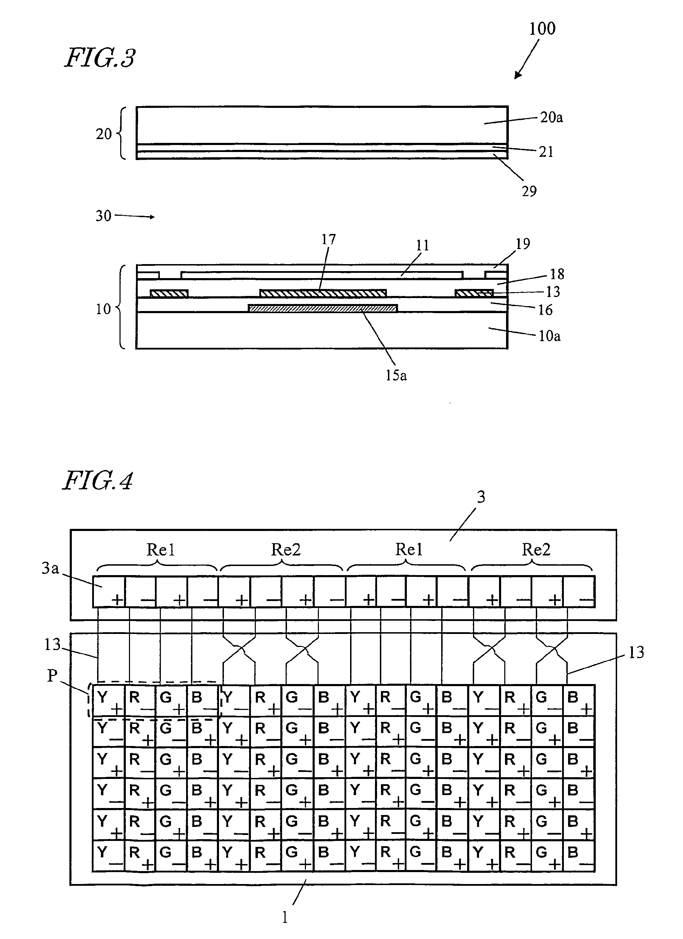

FIGS. **2** and **3** illustrate a specific structure for the LCD panel **1.** Specifically, FIG. **2** is a plan view illustrating a region of the LCD panel **1** that is allocated to a pixel, and FIG. **3** is a cross-sectional view thereof as viewed on the plane **3A-3A'** shown in FIG. **2.**

The LCD panel **1** includes an active-matrix substrate **10,** a counter substrate **20** that faces the active-matrix substrate **10,** and a liquid crystal layer **30** that is interposed between the active-matrix substrate **10** and the counter substrate **20.**

The active-matrix substrate **10** includes a pixel electrode **11,** which is provided for each of a number of pixels, a plurality of scan lines **12** that run in the row direction, and a plurality of signal lines **13** that run in the column direction. The pixel electrode **11** is supplied with a scan signal from its associated scan line **12** via a thin-film transistor (TFT) **14** and is also supplied with a display signal from its associated signal line **13.**

The scan lines **12** are arranged on a transparent substrate (e.g., a glass substrate) **10a** with electrically insulating properties. On the transparent substrate **10a,** also arranged is a storage capacitor line **15** that runs in the row direction. The storage capacitor line **15** and the scan lines **12** are made of the same conductor film. A portion **15a** of the storage capacitor line **15,** which is located around the center of the pixel, has a broader width than any other portion and functions as a storage capacitor counter electrode, which is supplied with a storage capacitor counter voltage (CS voltage) from the storage capacitor line **15.**

A gate insulating film **16** is arranged to cover the scan lines **12** and the storage capacitor line **15.** On the gate insulating film **16,** arranged are the signal lines **13** and a storage capacitor electrode **17,** which are both made of the same conductor film. The storage capacitor electrode **17** is electrically connected to the drain electrode of the TFT **14.** And the storage capacitor electrode **17** and the pixel electrode **11** are supplied with the same voltage via the TFT **14.**

An interlayer insulating film **18** is arranged to cover the signal lines **13** and the storage capacitor electrode **17.**

The pixel electrode **11** is located on the interlayer insulating film **18**. The pixel electrode **11** is arranged so that its edges overlap with the scan lines **12** and the signal lines **13** with the interlayer insulating film **18** interposed between them.

An alignment film **19** is arranged on the uppermost surface of the active-matrix substrate **10** to contact with the liquid crystal layer **30**. The alignment film **19** may be either a horizontal alignment film or a vertical alignment film depending on the mode of display to take.

The counter substrate **20** includes a counter electrode **21,** which faces the pixel electrode **11** and which is arranged on a transparent substrate (such as a glass substrate) **20a** with electrically insulating properties. An alignment film **29** is arranged on the uppermost surface of the counter substrate **20** to contact with the liquid crystal layer **30.** The alignment film **29** may be either a horizontal alignment film or a vertical alignment film depending on the mode of display to take. Although not shown in any of the drawings, the counter substrate **20** typically further includes a color filter layer and an opaque layer (i.e., a black matrix).

The liquid crystal layer **30** includes liquid crystal molecules that have either positive or negative dielectric anisotropy depending on the mode of display to take, and a chiral agent as needed.

In the LCD panel **1** with such a structure, a liquid crystal capacitor $C_{LC}$ is formed by the pixel electrode **11**, the counter electrode **21** that faces the pixel electrode **11,** and the liquid crystal layer **30** interposed between those electrodes **11** and **21**. Also, a storage capacitor $C_{CS}$ is formed by the storage capacitor electrode **17,** the storage capacitor counter electrode **15a** that faces the storage capacitor electrode **17,** and the gate insulating film **16** interposed between those electrodes **17** and **15a**. And a pixel capacitance **Cpix** is formed by the liquid crystal capacitor $C_{LC}$ and the storage capacitor $C_{CS}$ that is arranged in parallel to the liquid crystal capacitor $C_{LC}$.

The scan line driver **2** supplies a scan signal to each of those scan lines **12** of the LCD panel **1**. On the other hand, the signal line driver **3** supplies a positive or negative grayscale voltage as a display signal to each of the signal lines **13** of the LCD panel **1.**

Hereinafter, the relation between the arrangement of pixels in the LCD panel **1** and the polarities of the grayscale voltages applied from the signal line driver **3** to the respective pixels by way of the signal lines **13** will be described with reference to FIG. **4.** It should be noted that the polarities of the grayscale voltages are determined by reference to the voltage applied to the counter electrode **21** (which will be referred to herein as a "counter voltage").

As shown in FIG. **4,** the pixels include red, green, blue, and yellow pixels **R, G, B** and **Y** representing the colors red, green, blue, and yellow, respectively. That is to say, the pixels of the LCD panel **1** include four kinds of pixels that represent mutually different colors. In association with those red, green, blue, and yellow pixels **R, G, B** and **Y,** the color filter layer of the counter substrate **20** includes red, green, blue, and yellow color filters that transmit red, green, blue, and yellow rays, respectively.

Those pixels are arranged so that the four kinds of pixels are repeatedly arranged in the same order in the row direction. Specifically, in this example, those pixels are arranged recursively in the order of yellow, red, green and blue pixels **Y, R, G** and **B** from the left to the right.

One picture element **P**, which is the minimum unit to conduct a display operation in colors, is formed by a set of four pixels that are arranged consecutively in the row direction. That is why each of the multiple rows of pixels includes a number of picture elements **P**. And in each of those picture elements **P,** the four kinds of pixels are arranged in the order of yellow, red, green and blue pixels **Y, R, G** and **B** from the left to the right.

In each of the multiple picture elements **P,** grayscale voltages of mutually opposite polarities are applied through associated signal lines **13** to the pixel electrodes **11** of two arbitrary adjacent pixels. Likewise, grayscale voltages of mutually opposite polarities are also applied through an associated signal line **13** to the pixel electrodes **11** of two arbitrary pixels that are adjacent to each other in the column direction.

As described above, in the liquid crystal display device **100,** the polarity of the grayscale voltage inverts every pixel in the column direction. In the same way, in the row direction, the polarity of the grayscale voltage also inverts every pixel in each picture element **P**. In this manner, the liquid crystal display device **100** performs an inversion drive that is similar to the dot inversion drive. Also, in the liquid crystal display device **100,** in two arbitrary ones of the picture elements **P** that are adjacent to each other in the row direction, grayscale voltages of mutually opposite polarities are applied through their associated signal lines **13** to the pixel electrodes **11** of pixels that display the same color. That is why it is possible to prevent the voltages applied to multiple pixels representing the same color in the row direction from having the same polarity, thus avoiding casting horizontal shadows.

Such an inversion drive that can avoid casting horizontal shadows can be carried out by connecting the signal lines **13** to the signal line driver **3** as shown in FIG. **4.**

The signal line driver **3** includes a plurality of output terminals **3a** that are arranged in the row direction. Two arbitrary adjacent ones of the output terminals **3a** output grayscale voltages of opposite polarities. Each of those output terminals **3a** of the signal line driver **3** is connected one to one to an associated one of the signal lines **13** of the LCD panel **1.** If regions where those output terminals **3a** are connected to the signal lines **13** are referred to as "connection regions", those connection regions include two kinds of regions **Re1** and **Re2**. Hereinafter, those regions **Re1** and **Re2** will be described in detail. In the following description, those signal lines **13** will be counted from the left to the right in FIG. **4** and will be referred to herein as "first, second, third signal lines **13**" and so on. In the same way, those output terminals **3a** will also be counted from the left to the right in FIG. **4** and will also be referred to herein as "first, second, third output terminals **3a**" and so on.

As shown in FIG. **4,** in each of the regions **Re1,** an $i^{th}$ signal line **13** (where i is a natural number) and an $i^{th}$ output terminal **3a** are connected together. That is to say, the signal lines **13** and the output terminals **3a** are connected together sequentially. That is why this kind of regions **Re1** will be referred to herein as "sequential connection regions". For example, in the sequential connection region **Re1** shown on the left-hand side of FIG. **4,** the first signal line **13** and the first output terminal **3a** are connected together, so are the second signal line **13** and the second output terminal **3a,** the third signal line **13** and the third output terminal **3a,** and the fourth signal line **13** and the fourth output terminal **3a.**

On the other hand, in each of the regions **Re2,** a $j^{th}$ signal line **13** (where j is a different natural number from i) and a $(j+1)^{th}$ output terminal **3a** are connected together and a $(j+1)^{th}$ signal line **13** and a $j^{th}$ output terminal **3a** are connected together. That is to say, the signal lines **13** and the output terminals **3a** are not connected sequentially but in reverse order. That is why this kind of regions **Re2** will be referred to herein as "reverse connection regions". For example, in the reverse connection region **Re2** shown on the left-hand side of FIG. **4,** the fifth signal line **13** and the sixth output terminal **3a** are connected together, so are the sixth signal line **13** and the fifth output terminal **3a,** the seventh signal line **13** and the eighth output terminal **3a,** and the eighth signal line **13** and the seventh output terminal **3a.**

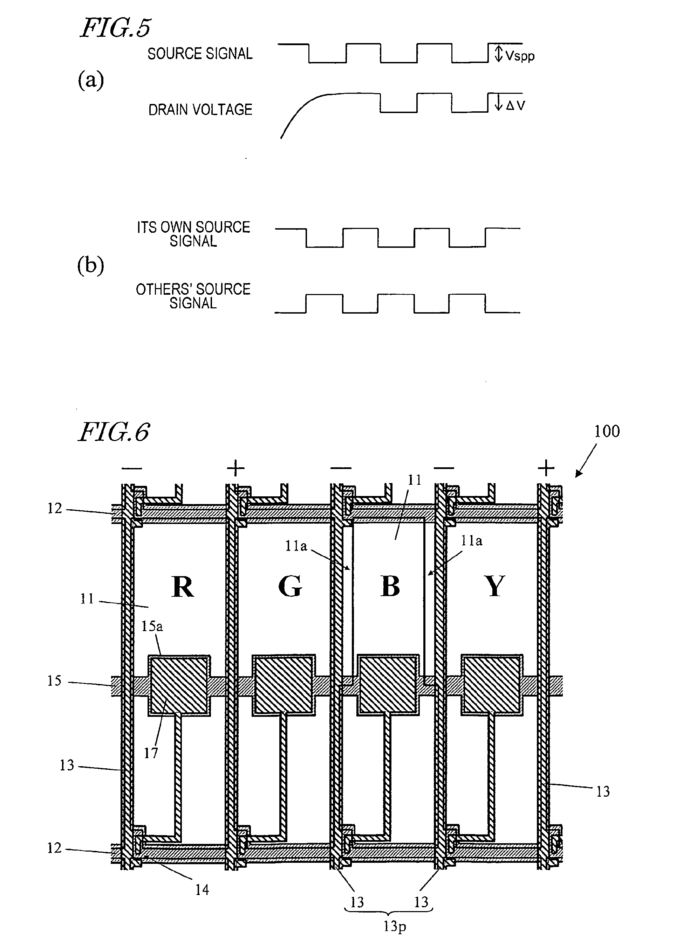

Since there are such sequential connection regions **Re1** and reverse connection regions **Re2** in the same mixture as described above, an inversion drive can be carried out with the horizontal shadows eliminated. If such an inversion drive is carried out, however, pixels representing a certain color will be interposed between two signal lines **13** that supply grayscale voltages of the same polarity. For example, in the arrangement shown in FIG. **4,** the blue pixels **B** are located between the signal line **13** that supplies a grayscale voltage to the pixel electrodes **11** of those blue pixels **11** and the signal line **13** that supplies a grayscale voltage to the pixel electrodes **11** of adjacent yellow pixels **Y** on the right-hand side of the blue pixels **B.** And the grayscale voltages supplied through these two signal lines **13** have the same polarity. In the conventional liquid crystal display device **1000** shown in FIG. **28,** such pixels that are located between two signal lines that supply voltages of the same polarity come to have a different display luminance from the original level, thus debasing the display quality. On the other hand, the liquid crystal display device **100** of this preferred embodiment can minimize such a decline in display quality. Before the reason is described in detail, it will be described first with reference to FIG. **5** why the display quality is debased in the conventional liquid crystal display device **1000.**

As shown in FIG. **5(a),** when a display signal (i.e., a source signal) supplied to a signal line **13** after a pixel has been charged changes, the potential at its pixel electrode **11** (i.e., a drain voltage) also varies by way of the parasitic capacitance between the source and the drain (i.e., a source-drain capacitance **Csd**). In that case, the magnitude $\Delta V$ of the variation can be calculated by the following Equation (1) using the magnitude of variation (i.e., amplitude) **Vspp** of the source signal, the source-drain capacitance **Csd** and the pixel capacitance Cpix:

$$\Delta V = Vspp \cdot (Csd/Cpix) \tag{1}$$

In general, the potential at the pixel electrode **11** of a certain pixel is affected by not only a variation in voltage on the signal line **13** that supplies a grayscale voltage to the pixel electrode **11** of that pixel (and that will be sometimes referred to herein as "its own source") but also by a variation in voltage on the signal line **13** that supplies a grayscale voltage to the pixel electrode **11** of a pixel that is adjacent to the former pixel in the row direction (and that will be sometimes referred to herein as "others' source"). For that reason, if the polarities of its own source signal and others' source signal are opposite to each other as shown in FIG. **5(b)**, the variation $\Delta v$ in potential at the pixel electrode **11** is canceled.

In the conventional liquid crystal display device **1000,** however, since its own source signal and others' source signal have the same polarity in each of the pixels that are located between two signal lines that supply voltages of the same polarity, $\Delta V$ is not canceled. As a result, the drain voltage decreases by $\Delta V$ and the effective voltage applied to the liquid crystal layer decreases, too. Consequently, the display luminance varies from the original level, and the image on the screen darkens and the display quality gets debased in the normally black mode.

Next, it will be described why the liquid crystal display device **100** of this preferred embodiment can minimize such a decline in display quality.

FIG. **6** illustrates four pixels that are arranged consecutively in the row direction in the liquid crystal display device **100.** Specifically, the four pixels shown in FIG. **6** are red, green, blue, and yellow pixels **R, G, B** and **Y** from the left to the right. As described above, in this liquid crystal display device **100,** the blue pixels **B** are located between two signal lines **13** that supply voltages of the same polarity. That is to say, the blue pixels **B** are located between a pair of signal lines **13p** consisting of two signal lines **13** that are adjacent to each other and that supply grayscale voltages of the same polarity. On the other hand, each of the red, green and yellow pixels **R, G** and **Y** is located between two signal lines **13** that supply voltages of opposite polarities.

In the liquid crystal display device **100** of this preferred embodiment, the pixel electrode **11** of the blue pixel **B** has a different shape from the pixel electrodes **11** of the red, green and yellow pixels **R, G** and **Y.** Specifically, the pixel electrode **11** of the blue pixel **B** has two notches **11a** (i.e., portions that are present in the pixel electrode **11** of the other pixels but absent from this pixel electrode **11**). In this example, the two notches **11a** are the respective upper halves of the rightmost and leftmost portions of the pixel electrode **11** and are substantially rectangular. However, this is only an example and the number and shape of the notches **11a** may be different from the ones adopted in this example.

When viewed along a normal to the display screen, the pixel electrode **11** of each pixel overlaps with two adjacent signal lines **11.** However, as the pixel electrode **11** of the blue pixel **B** has such notches **11a**, the combined area where the pixel electrode **11** of the blue pixel **B** overlaps with two adjacent signal lines **13** is smaller than the combined area where the pixel electrode **11** of any other pixel overlaps with two adjacent signal lines **13.**

That is why the source-drain capacitance **Csd** of the blue pixel **B** is smaller than that of any other pixel. Consequently, the magnitude of variation Δ**v** in drain voltage represented by Equation (1) decreases so much that the display luminance of the blue pixel **B** varies much less and the decline in display quality can be minimized.

To enhance the effect of minimizing the decline in display quality, it is preferred for the following reason that the source-drain capacitance **Csd** of the blue pixel **B** be set to be approximately a half or less of that of any other pixel. If a display operation is performed in a single color by another pixel that is located between two signal lines **13** that supply voltages of opposite polarities (i.e., unless others' source signal varies), the magnitudes of variation Δ**v₁** and Δ**v₂** in drain voltage due to the influence of its own source and others' source are represented by the following Equations (2) and (3), respectively. Consequently, the magnitude of the total variation Δ **V_Total** is represented by the following Equation (4):

$$\Delta V_1 = Vspp \cdot (Csd/Cpix) \qquad\qquad (2)$$

$$\Delta V_2 = 0 \qquad\qquad (3)$$

$$\Delta V_{Total} = \Delta V_1 + \Delta V_2 = Vspp \cdot (Csd/Cpix) \qquad\qquad (4)$$

On the other hand, if a display operation is performed by the blue pixel **B** that is located between two signal lines **13** that supply voltages of the same polarities (i.e., if its own source signal and others' source signal both vary), the magnitudes of variation Δ**v₁** and Δ**v₂** in drain voltage due to the influence of its own source and others' source are represented by the following Equations (5) and (6), respectively. Consequently, the magnitude of the total variation Δ **V_Total** is represented by the following Equation (7):

$$\Delta V_1 = Vspp \cdot (Csd/Cpix) \qquad\qquad (5)$$

$$\Delta V_2 = Vspp \cdot (Csd/Cpix) \qquad\qquad (6)$$

$$\Delta V_{Total} = \Delta V_1 + \Delta V_2 = 2 \cdot Vspp \cdot (Csd/Cpix) \qquad\qquad (7)$$

Comparing Equations (4) and (7) to each other, it can be seen that by setting the source-drain capacitance **Csd** of the blue pixel **B** to be approximately a half of that of the other pixels, the variation in the drain voltage of the blue pixel **B** can be almost the same as in a situation where a display operation is conducted in a single color by any other pixel.

In the equations described above, the parasitic capacitance **Csd(its own)** between its own source and the drain and the parasitic capacitance **Csd(others)** between others' source and the drain are supposed to be the same and are both identified by Csd. Naturally, however, Csd(its own) and Csd(others) may be different from each other. In that case, the sum (or the average) of Csd(its own) of the blue pixel **B** and Csd(others) just needs to be smaller than the sum (or the average) of Csd(its own) and Csd(others) of any other pixel. Nevertheless, in order to minimize the variation in drain voltage of the pixels that are located between two signal lines **13** that supply voltages of opposite polarities, it is still preferred that Csd(its own) and Csd(others) be substantially equal to each other. In this description, if "the source-drain capacitance **Csd** of a pixel is smaller than the source-drain capacitance **Csd** of another pixel", then it means that the sum (or the average) of Csd(its own) and Csd(others) of one pixel is smaller than the sum (or the average) of Csd(its own) and Csd(others) of another pixel, no matter whether Csd(its own) and Csd(others) are the same or not.

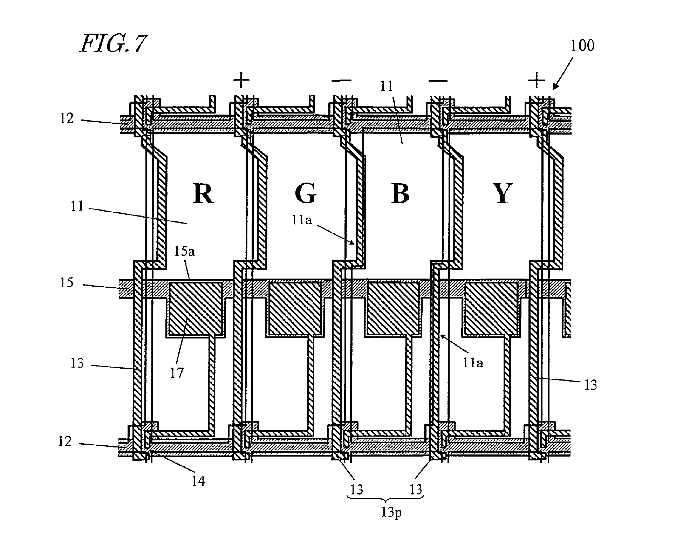

In the arrangements shown in FIGS. **2** and **6,** the signal lines **13** are supposed to run straight in the row direction through the display area. However, the signal lines **13** may also be bent as shown in FIG. **7.** By arranging zigzag signal lines **13** such as the ones shown in FIG. **7,** the variation in source-drain capacitance **Csd** due to a misalignment that has occurred while the pixel electrodes **11** are formed by photolithographic process can be reduced significantly as disclosed in Japanese Patent Application Laid-Open Publication No. 2001-281696.

Even with such zigzag signal lines **13** adopted, if the pixel electrode **11** of each blue pixel **B** that is located between two signal lines **13** that supply voltages of the same polarity has notches **11a**, the source-drain capacitance **Csd** of the blue pixel **B** can still be smaller than that of any other pixel. As a result, the decline in display quality can be minimized.

In the foregoing description, the blue pixels **B** are supposed to be located between two signal lines **13** that supply voltages of the same polarity (i.e., between the pair of signal lines **13p**). However, the present invention is in no way limited to that specific preferred embodiment. Alternatively, the arrangement of the four kinds of pixels in each picture element **P** may be different from what is illustrated in FIG. **4.** And red, green or yellow pixels **R, G** or **Y** may be located between the signal lines **13** that supply voltages of the same polarity. Even so, the decline in display quality can also be minimized by setting the source-drain capacitance **Csd** of the pixels that are located between the signal lines **13** that supply voltages of the same polarity to be smaller than that of the other pixels.

Still, in order to improve the display quality, it is preferred that the blue pixels **B** be located between the signal lines **13** that supply voltages of the same polarity. The blue pixels **B** have lower luminosity factor than the other pixels, and therefore, a shift of the display luminance due to a variation in drain potential is less easily recognizable.

(EMBODIMENT 2)

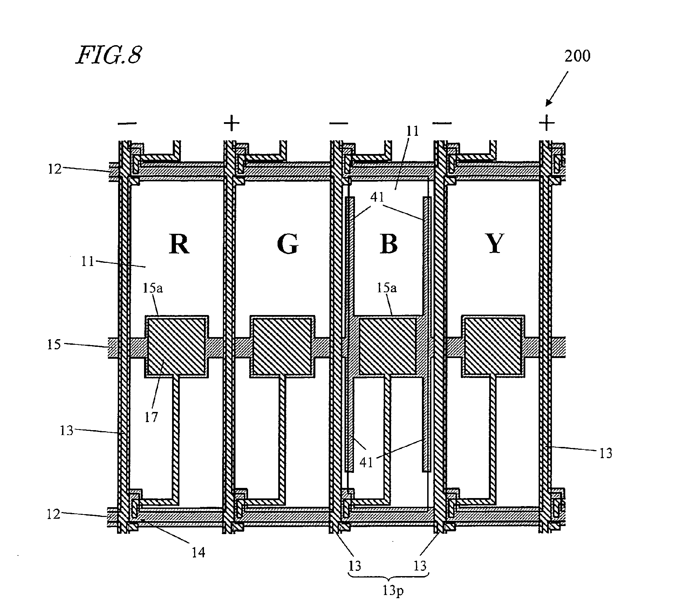

Hereinafter, the structure of a liquid crystal display device **200** as a second specific preferred embodiment of the present invention will be described with reference to FIG. **8,** which illustrates four pixels that are arranged consecutively in the row direction just like FIGS. **6** and **7** that illustrate the liquid crystal display device **100** of the first preferred embodiment. The following description will be focused on differences of this liquid crystal display device **200** from the liquid crystal display device **100.** In the drawings to be referred to in the following description, any component also included in the liquid crystal display device **100** and having substantially the same function as its counterpart is identified by the same reference numeral and description thereof will be omitted herein.

In this liquid crystal display device **200,** the pixel electrode **11** of each blue pixel **B** that is located between signal lines **13** that supply voltages of the same polarity does not overlap with the signal lines **13** when viewed along a normal to the display screen. Also, shield electrodes **41** are provided for the blue pixel **B.**

The shield electrodes **41** are arranged near the edges of the pixel electrode **11** and are supplied with a different voltage from the grayscale voltage that is applied to the pixel electrode **11.** Also, the shield electrodes **41** are arranged so as to run substantially parallel to the two signal lines **13** that are adjacent to the pixel electrode **11** of the blue pixel **B** and to overlap with the edges of the pixel electrode **11.**

The shield electrodes **41** of this preferred embodiment are made of the same conductor film as the scan lines **12** and the storage capacitor lines **15** and are extended from the storage capacitor counter electrodes **15a,** which form part of the storage capacitor lines **15.** That is why the shield electrodes **41** are electrically connected to the storage capacitor lines **15** and are supplied with the CS voltage.

In this preferred embodiment, since the pixel electrode **11** of the blue pixel **B** does not overlap with the signal lines **13,** the source-drain capacitance **Csd** of the blue pixel **B** is smaller than that of the other pixels. Also, even if the pixel electrode **11** does not overlap with the signal lines **13** when viewed along a normal to the display screen, electrostatic capacitance may still be produced between the signal lines **13** and the pixel electrode **11.** However, as the shield electrodes **41** described above are provided according to this preferred embodiment, electric lines of force that are directed from the pixel electrode **11** toward the signal lines **13** can be led to the shield electrodes **41.** As a result, it is possible to prevent such a capacitance from being produced between the pixel electrode **11** and the signal lines **13.** Consequently, as the shield electrodes **41** are provided, the source-drain capacitance **Csd** of the blue pixel **B** further decreases. As a result, the liquid crystal display device **200** of this preferred embodiment can also decrease the shift of the display luminance of the pixels (i.e., the blue pixels **B**) that are located between the signal lines **13** that supply voltages of the same polarity, and can also minimize the decline in display quality.

In this preferred embodiment, the shield electrodes **41** are supposed to be extended from the storage capacitor counter electrodes **15a** and electrically connected to the storage capacitor lines **15.** However, the shield electrodes **41** do not have to have such a structure. Rather, the shield electrodes **41** may have any other structure as long as the shield electrodes **41** can be supplied with a different voltage from the grayscale voltage applied to the pixel electrode **11.** For example, the shield electrodes **41** may be electrically connected to the scan lines **12.**

Furthermore, in order to prevent more securely a capacitance from being produced between the pixel electrode **11** and the signal lines **13,** it is preferred that the shield electrodes **41** be arranged so as to overlap with the edges of the pixel electrode **11.**

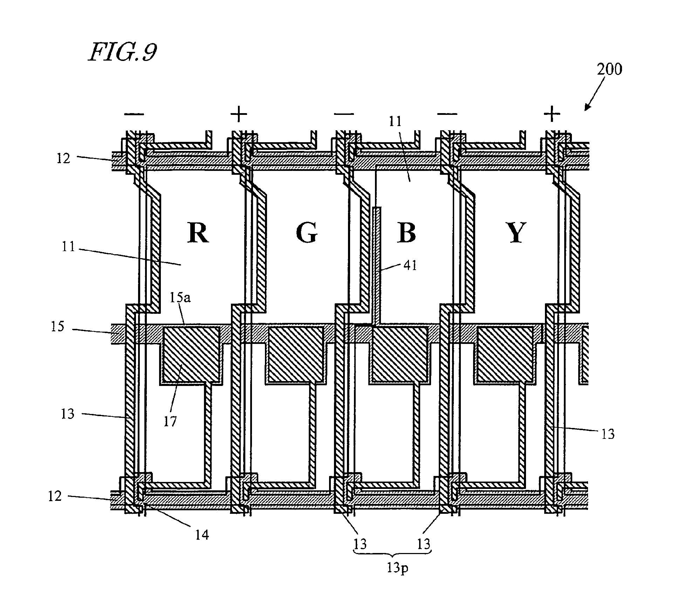

In the arrangement shown in FIG. **8,** the signal lines **13** are supposed to run straight in the row direction through the display area. However, the signal lines **13** may also be bent as shown in FIG. **9.** By arranging zigzag signal lines **13** such as the ones shown in FIG. **9,** the variation in source-drain capacitance **Csd** due to a misalignment that has occurred while the pixel electrodes **11** are formed by photolithographic process can be reduced significantly as already described with reference to FIG. **7.**

Even with such zigzag signal lines **13** adopted, if the pixel electrode **11** of each blue pixel **B** is arranged so as not to overlap with its own source (i.e., the signal lines **13** that supply the grayscale voltage to the pixel electrode **11** of the blue pixel **B**) but do overlap with others' source and if the shield electrodes **41** are provided, the source-drain capacitance **Csd** of the blue pixel **B** can still be smaller than that of any other pixel. As a result, the decline in display quality can be minimized.

(EMBODIMENT 3)

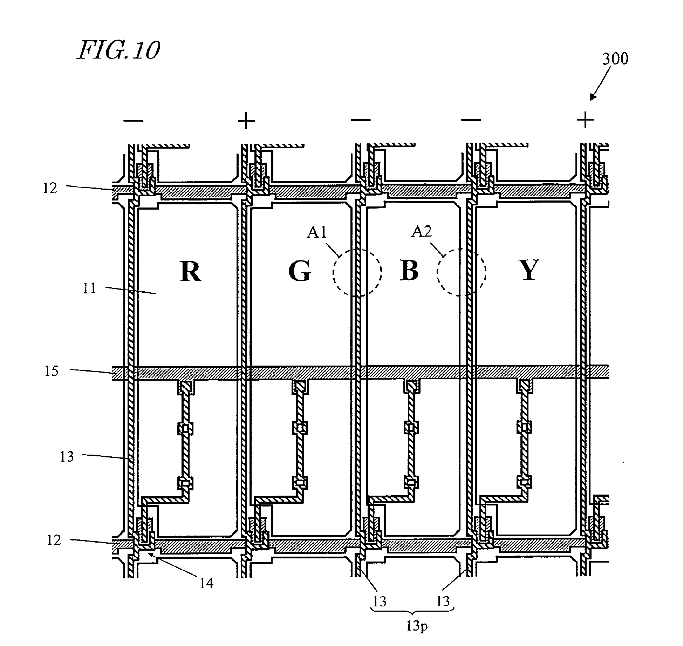

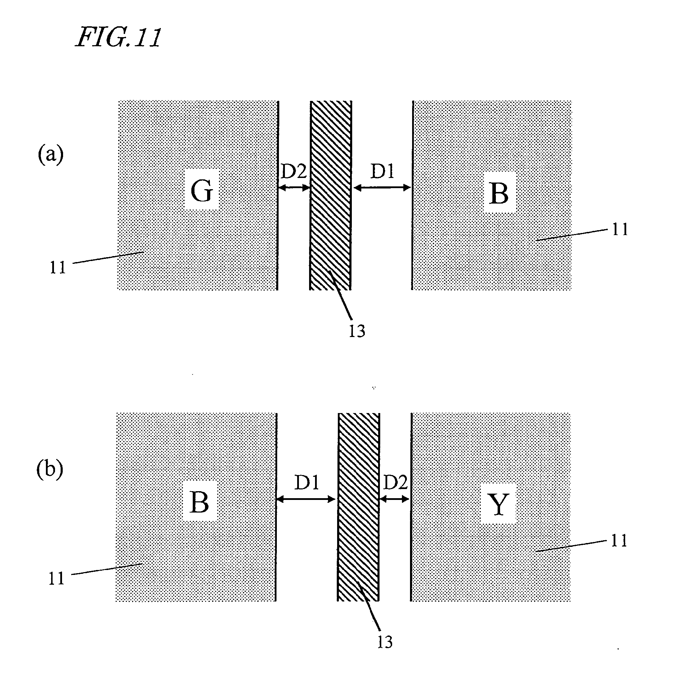

Hereinafter, the structure of a liquid crystal display device **300** as a third specific preferred embodiment of the present invention will be described with reference to FIGS. **10** and **11.** FIG. **10** illustrates four pixels that are arranged consecutively in the row direction just like FIGS. **6** and **7** that illustrate the liquid crystal display device 100 of the first preferred embodiment. On the other hand, FIGS. **11(a)** and **11(b)** respectively illustrate, on a larger scale, the areas **A1** and **A2** that are indicated by the dashed circles in FIG. **10.** The following description will be focused on differences of this liquid crystal display device **300** from the liquid crystal display device **100.**

In this liquid crystal display device **300,** when viewed along a normal to the display screen, the pixel electrode **11** does not overlap with any of the two adjacent signal lines **13** in any of red, blue, green and yellow pixels **R, B, G** and **Y.** However, the distance **D1** from the pixel electrode **11** of each blue pixel **B** that is located between the signal lines **13** that supply voltages of the same polarity to those two signal lines **13** adjacent to that pixel electrode **11** is longer than the distance **D2** from the pixel electrode **11** of any other pixel to the two signal lines **13** that are adjacent to that pixel electrode **11.**

That is why the source-drain capacitance **Csd** of the blue pixel **B** is smaller than that of any other pixel. Consequently, the liquid crystal display device **300** of this preferred embodiment can also reduce the shift of the display luminance of the pixel (i.e., blue pixel **B**) that is located between the signal lines **13** that supply voltages of the same polarity and can also minimize the decline in display quality.

In order to make the source-drain capacitance **Csd** of the blue pixel **B** much smaller than that of any other pixel, the distance **D1** from the pixel electrode **11** of the blue pixel **B** to the signal lines **13** and the distance **D2** from the pixel electrode **11** of the other pixels to the signal lines **13** preferably satisfy the inequality $D1 \geqq 2 \cdot D2$. That is to say, it is preferred that the distance **D1** be twice or more as long as the distance **D2.**

It should be noted that in the arrangement shown in FIG. **10,** neither the storage capacitor electrodes **17** nor the storage capacitor counter electrodes **15a** (i.e., portions of the storage capacitor lines **15** that have an increased width so as to face the storage capacitor electrodes **17**) are provided. This is because as the interlayer insulating film **18** is thinner than in the arrangement shown in FIG. **2,** a storage capacitor $C_{CS}$ with a sufficiently large capacitance value can be formed by the overlap between the pixel electrode **11** and the storage capacitor line **15.** Naturally, depending on the thickness of the interlayer insulating film **18** or the value of the storage capacitance required, the storage capacitor electrodes **17** and the storage capacitor counter electrodes **15a** may be provided.

(EMBODIMENT 4)

A liquid crystal display device as a fourth specific preferred embodiment of the present invention can carry out a multi-pixel drive (pixel division drive) operation. By adopting the multi-pixel drive, the viewing angle dependence of the $\gamma$ characteristic, which refers to a phenomenon that the $\gamma$ characteristic when the screen is viewed straight on is different from the characteristic when it is viewed obliquely, can be reduced significantly. In this case, the "$\gamma$ characteristic" refers to the grayscale dependence of display luminance. According to the multi-pixel drive, a single pixel is made up of multiple subpixels that can display mutually different luminances, thereby displaying a predetermined luminance associated with a display signal that has been supplied to the pixel. That is to say, the multi-pixel drive is a technique for reducing the viewing angle dependence of the $\gamma$ characteristic of a pixel by synthesizing together the mutually different $\gamma$ characteristics of multiple subpixels thereof.

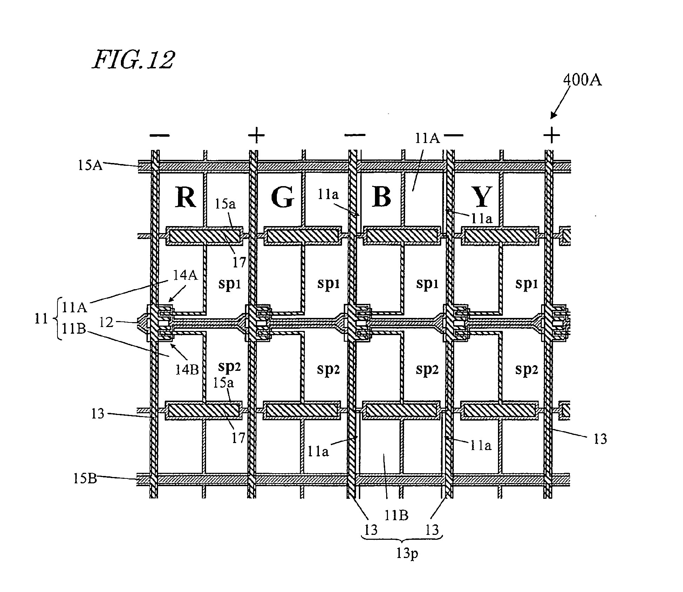

FIGS. **12, 13** and **14** illustrate liquid crystal display devices **400A, 400B** and **400C** according to this preferred embodiment. In these liquid crystal display devices **400A, 400B** and **400C,** each pixel includes multiple (specifically, two in this case) subpixels **sp1** and **sp2** that can exhibit mutually different luminances.

The pixel electrode **11** of each pixel also has two subpixel electrodes **11A** and **11B,** which are associated with the two subpixels **sp1** and **sp2,** respectively, and which are connected to their associated TFTs **14A** and **14B,** respectively.

The respective gate electrodes of the two TFTs **14A** and **14B** are connected in common to the same scan line **12** and have their ON and OFF states controlled with the same gate signal. Also, the respective source electrodes of the two TFTs **14A** and **14B** are connected in common to the same signal line **13.**

A storage capacitor is provided for each of the two subpixels **sp1** and **sp2.** The storage capacitor electrode 17 that forms part of the storage capacitor of one subpixel **sp1** is electrically connected to the drain electrode of the TFT **14A.** On the other hand, the storage capacitor electrode **17** that forms part of the storage capacitor of the other subpixel **sp2** is electrically connected to the drain electrode of the TFT **14B.** Also, the storage capacitor counter electrode **15a** that forms another part of the storage capacitor of the subpixel **sp1** is electrically connected to the storage capacitor line **15A.** On the other hand, the storage capacitor counter electrode **15a** that forms another part of the storage capacitor of the subpixel **sp2** is electrically connected to the storage capacitor line **15B.** The respective storage capacitor counter electrodes **15a** of the subpixels **sp1** and **sp2** are independent of each other and are supplied with mutually different voltages (i.e., storage capacitor counter voltages) through the storage capacitor lines **15A** and **15B,** respectively. By changing the storage capacitor counter voltages applied to the storage capacitor counter electrodes **15A** and **15B,** mutually different effective voltages can be applied to the respective liquid crystal layers **30** of the subpixels **sp1** and **sp2** by utilizing the capacitance division technique. As a result, the subpixels **sp1** and **sp2** can have mutually different display luminances.

In the liquid crystal display devices **400A, 400B** and **400C** of this preferred embodiment, some pixels (e.g., the blue pixel **B** in the example illustrated in these drawings) are located between the signal lines **13** that supply voltages of the same polarity. However, by adopting the structure to be described below, the decline in display quality can also be minimized.

Specifically, in the liquid crystal display device **400A** shown in FIG. **12,** the pixel electrode **11** of the blue pixel **B** has notches **11a.** More specifically, two notches **11a** have been cut through each of the two subpixel electrodes **11A** and **11B** that the pixel electrode **11** of the blue pixel **B** has.

As the pixel electrode **11** of the blue pixel **B** has such notches **11a,** the combined area where the pixel electrode **11** of the blue pixel **B** overlaps with two adjacent signal lines **13** is smaller than the combined area where the pixel electrode **11** of any other pixel overlaps with two adjacent signal lines **13.** That is why the source-drain capacitance **Csd** of the blue pixel **B** is smaller than that of any other pixel. Consequently, the shift of the display luminance of the blue pixel **B** can be reduced and the decline in display quality can be minimized.

According to this preferred embodiment, since the notches **11a** have been cut through each of the two subpixel electrodes **11A** and **11B,** the effect of reducing the shift of the display luminance can be achieved in each of the multiple subpixels **sp1** and **sp2** of the blue pixel **B.**

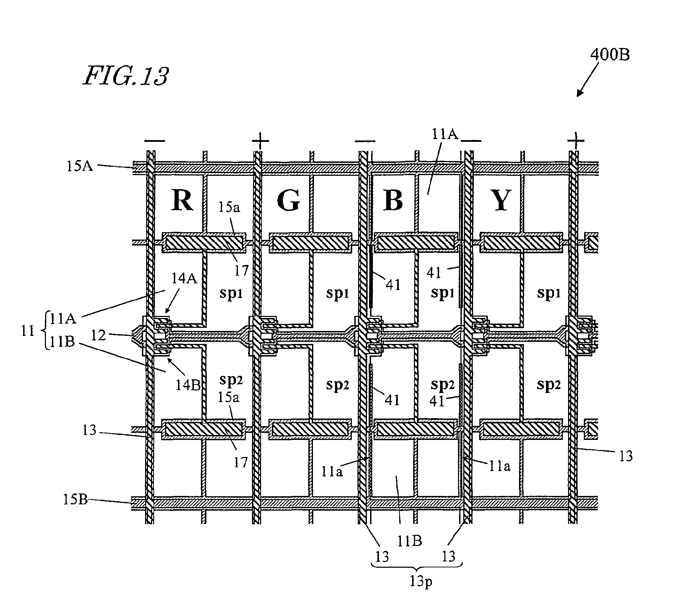

In the liquid crystal display device **400B** shown in FIG. **13,** on the other hand, the pixel electrode **11** of the blue pixel **B** does not overlap with the signal lines **13** when viewed along a normal to the display screen. But shield electrodes **41** are provided for the blue pixel **B.** The shield electrodes **41** are arranged near the edges of the pixel electrode **11,** more specifically, in the vicinity of the respective edges of the subpixel electrodes **11A** and **11B,** and are extended from the storage capacitor lines **15A** and **15B.**

In this liquid crystal display device **400B,** since the pixel electrode **11** of the blue pixel **B** does not overlap with the signal lines **13,** the source-drain capacitance **Csd** of the blue pixel **B** is smaller than that of the other pixels. Also, since the shield electrodes **41** are provided, it is possible to prevent an electrostatic capacitance from being produced between the pixel electrode **11** and the signal lines **13.** Consequently, as the shield electrodes **41** are provided, the source-drain capacitance **Csd** of the blue pixel **B** further decreases. As a result, the shift of the display luminance of the pixels (i.e., the blue pixels **B**) that are located between the signal lines **13** that supply voltages of the same polarity can be decreased, and the decline in display quality can be minimized.

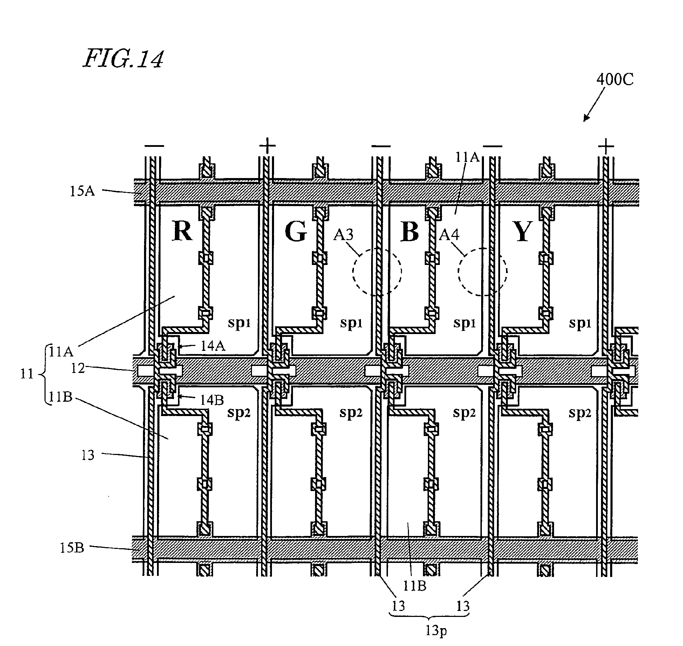

In the liquid crystal display device **400C** shown in FIG. **14,** when viewed along a normal to the display screen, the pixel electrode **11** does not overlap with the two adjacent signal lines **13** in any of red, blue, green and yellow pixels **R, B, G** and **Y.** However, the distance from the pixel electrode **11** of each blue pixel **B** to the signal lines **13** is different from the distance from the pixel electrode **11** of any other pixel to the two signal lines **13.**

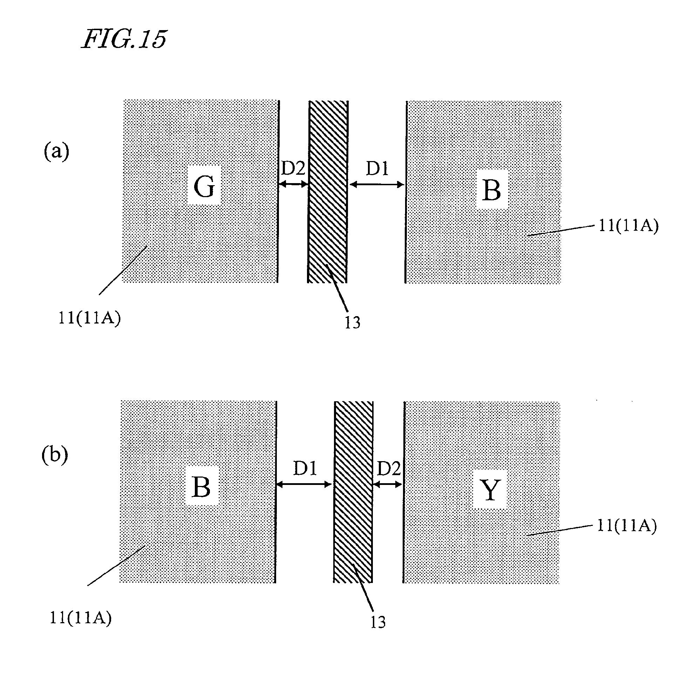

FIGS. **15(a)** and **15(b)** respectively illustrate, on a larger scale, the areas **A3** and **A4** that are indicated by the dashed circles in FIG. **14**. As shown in FIGS. **15(a)** and **15 (b),** the distance **D1** from the pixel electrode **11** of each blue pixel **B** to the two adjacent signal lines **13** is longer than the distance **D2** from the pixel electrode **11** of any other pixel to the two adjacent signal lines **13.**

That is why the source-drain capacitance **Csd** of the blue pixel **B** is smaller than that of any other pixel. Consequently, the liquid crystal display device **400C** can also reduce the shift of the display luminance of the pixel (i.e.,

blue pixel **B**) that is located between the signal lines **13** that supply voltages of the same polarity and can also minimize the decline in display quality.

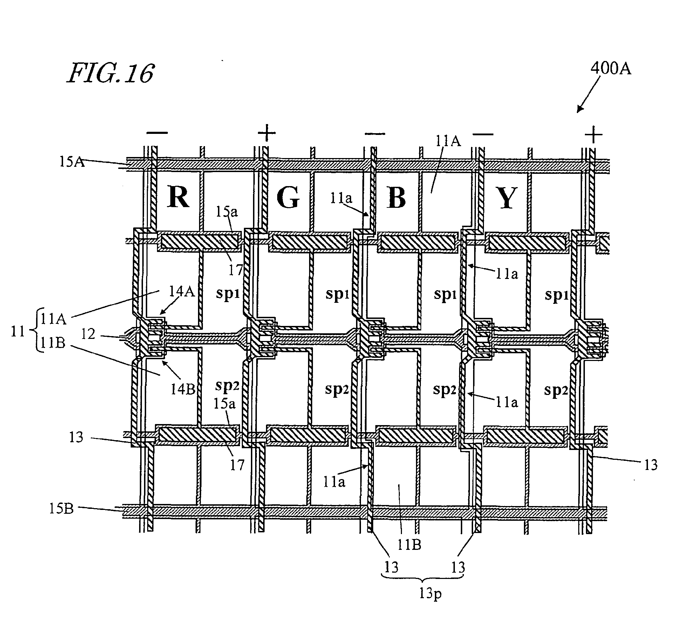

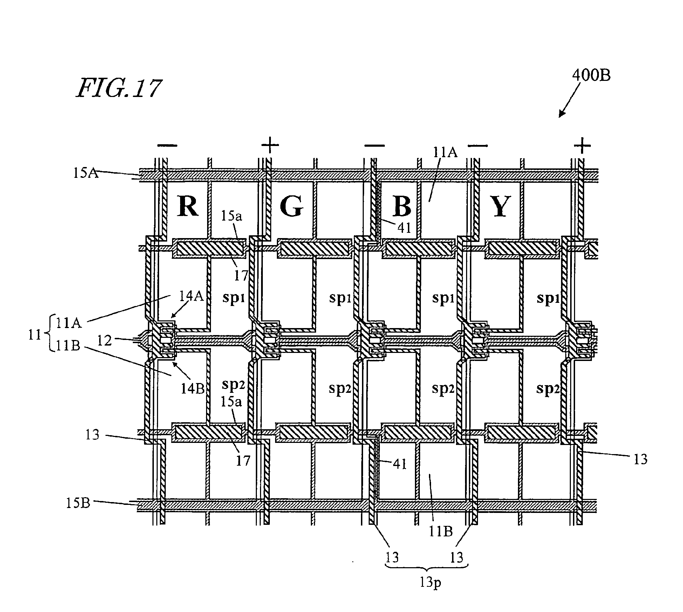

In the arrangements shown in FIGS. **12, 13** and **14,** the signal lines **13** are supposed to run straight in the row direction through the display area. However, the signal lines **13** may also be bent as shown in FIGS. **16** and **17.** By arranging zigzag signal lines **13** such as the ones shown in FIGS. **16** and **17,** the variation in source-drain capacitance **Csd** due to a misalignment that has occurred while the pixel electrodes **11** are formed by photolithographic process can be reduced significantly as already described with reference to FIG. **7.**

Even with such zigzag signal lines **13** adopted, if notches **11a** are cut through the pixel electrode **11** of the blue pixel **B** that is located between the signal lines **13** that supply voltages of the same polarity as shown in FIG. **16,** the source-drain capacitance **Csd** of the blue pixel **B** can be smaller than that of any other pixel. As a result, the decline in display quality can be minimized. Also, if the pixel electrode **11** of each blue pixel **B** is arranged so as not to overlap with its own source (i.e., the signal lines **13** that supply the grayscale voltage to the pixel electrode **11** of the blue pixel **B**) but do overlap with others' source and if the shield electrodes **41** are provided as shown in FIG. **17,** the source-drain capacitance **Csd** of the blue pixel **B** can still be smaller than that of any other pixel. As a result, the decline in display quality can be minimized, too.

(OTHER EMBODIMENTS)

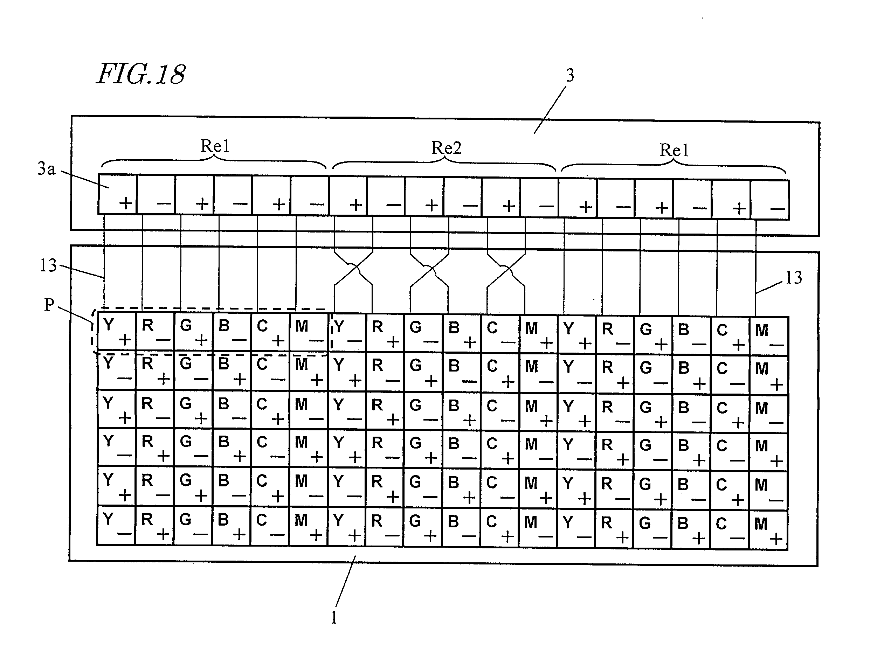

In the first through fourth preferred embodiments of the present invention described above, a single picture element **P** is supposed to be made up of four kinds of pixels as an example. However, this is just an example of the present invention. Rather, the present invention is broadly applicable for use in a liquid crystal display device in which each picture element **P** is defined by m different kinds of (where m is an even number that is equal to or greater than four) pixels that display mutually different colors. For example, each picture element **P** may be defined by six kinds of pixels as shown in FIG. **18.** In the arrangement illustrated in FIG. **18,** each picture element **P** includes not only red, green, blue, and yellow pixels **R, G, B** and **Y** but also cyan and magenta pixels **C** and **M** representing the colors cyan and magenta. Also, in the arrangement illustrated in FIG. **18,** the magenta pixels **M** are located between the signal lines **13** that supply voltages of the same polarity. That is why by cutting notches **11a** through the pixel electrode **11** of each magenta pixel **M** or by providing shield electrodes **41** for the magenta pixel **M** or by setting the distance from the pixel electrode **11** of the magenta pixel **M** to the signal lines **13** to be longer than the distance from the pixel electrode **11** of any other pixel to the signal lines **13,** the shift of the display luminance of the magenta pixel **M** from the original level can be reduced significantly and the decline in display quality can be minimized.

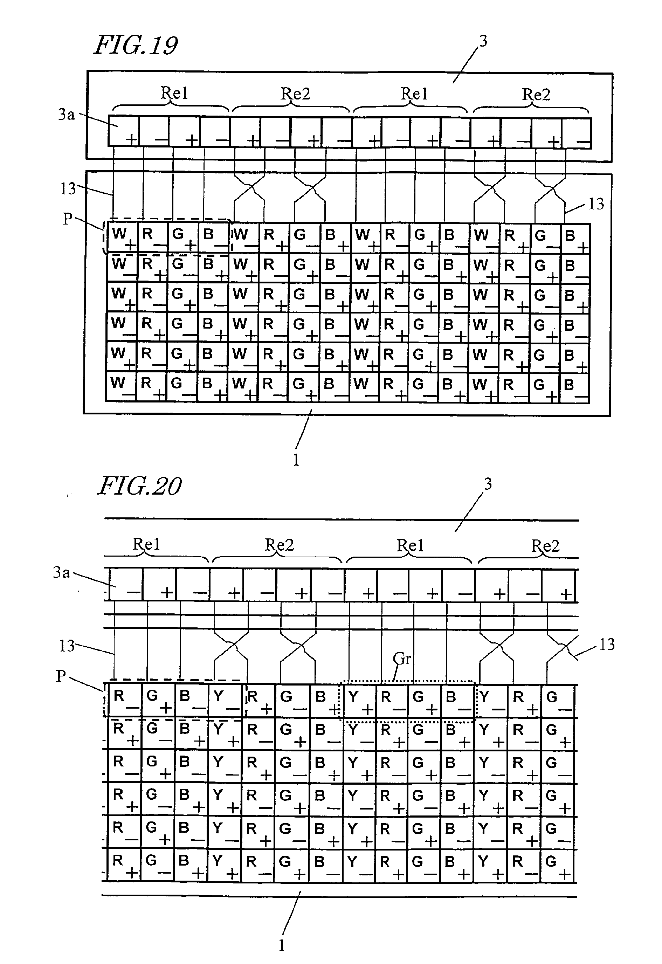

As for the respective kinds (i.e., the combination) of pixels that define a single picture element **P,** the combinations described above are just examples, too. For example, if each picture element **P** is defined by four kinds of pixels, each picture element **P** may be defined by either red, green, blue and cyan pixels **R, G, B** and **C** or red, green, blue and magenta pixels **R, G, B** and **M.** Alternatively, each picture element **P** may also be defined by red, green, blue and white pixels **R, G, B** and **W** as shown in FIG. **19.** If the arrangement shown in FIG. **19** is adopted, a colorless and transparent color filter (i.e., a color filter that transmits white light) is arranged in a region of the color filter layer of the counter substrate **20** that is allocated to the white pixel **W.** With the arrangement shown in FIG. **19** adopted, the color reproduction range cannot be broadened because the primary color added is the color white, but the overall display luminance of a single picture element **P** can be increased.

Also, in the arrangements shown in FIGS. **4, 18** and **19,** m different kinds of pixels are arranged in one row and m columns within each picture element **P,** and the color filters have a so-called "striped arrangement". However, this is only an example of the present invention, too. Rather, those pixels may be arranged so that n out of the m kinds of pixels (where n is an even number that is equal to or smaller than m and is a divisor of m) are repeatedly arranged in the same order in the row direction. That is to say, in each picture element **P,** the m kinds of pixels may be arranged in (m/n) row(s) and n columns. Specifically, m=n may be satisfied as shown in FIGS. **4, 18** and **19,** or m#n. For example, if each picture element **P** includes eight kinds of pixels, the eight kinds of pixels may be arranged in two rows and four columns in each picture element **P.**

Furthermore, in the preferred embodiments described above, the polarity of the grayscale voltage is supposed to invert every pixel without fail in the row direction within each picture element **P.** However, the present invention is in no way limited to those specific preferred embodiments. For instance, in the arrangement illustrated in FIG. **20,** four kinds of pixels, consisting of red, green, blue, and yellow pixels **R, G, B** and **Y,** are arranged in this order from the left to the right within each picture element **P,** but the grayscale voltage does not invert between the blue and yellow pixels **B** and **Y** that are adjacent to each other in the row direction within each picture element **P.** Nevertheless, even in the arrangement shown in FIG. **20,** if attention is paid to a group **Gr** of pixels in which yellow, red, green and blue pixels **Y, R, G** and **B** are arranged in this order from the left to the right on each row of pixels, it can be seen that the polarity of the grayscale voltage never fails to invert every pixel in the row direction within that group **Gr** of pixels. Consequently, even when the arrangement shown in FIG. **20** is adopted, the effect of the inversion drive (such as the effect of minimizing the generation of flicker) can also be achieved as significantly as when the arrangement shown in FIG. **4** is adopted.

As described above, in the liquid crystal display device of the present invention, the pixels are arranged so that n out of the m kinds of pixels (where m is an even number that is equal to or greater than four and n is an even number that is equal to or smaller than m and is a divisor of m) are repeatedly arranged in the same order in the row direction. That is why each of multiple rows of pixels may include multiple groups of pixels, to each of which n pixels that are arranged consecutively in the row direction belong and in each of which grayscale voltages of opposite polarities are supplied through associated signal lines **13** to two arbitrary adjacent pixels. In this case, each group of pixels may form one picture element **P** (i.e., one picture element **P** may agree with one group of pixels) as shown in FIG. **4** or one picture element **P** and one group **Gr** of pixels may not agree with each other as shown in FIG. **20.**

Also, in the arrangement shown in FIG. **4,** for example, when the signal lines **13** are connected to the signal line driver **3,** the sequential connection regions **Re1** and the reverse connection regions **Re2** are arranged in the same mixture, thereby carrying out an inversion drive that can avoid casting horizontal shadows. However, the reverse connection regions **Re2** do not always have to be provided. For example, the arrangement of multiple output terminals **3a** of the signal line driver **3** may be modified as shown in FIG. **21.**

In the arrangement shown in FIG. **21,** the output terminals **3a** include multiple groups **3g** of output terminals, to each of which n (e.g., four in this example) output terminals **3a** that are arranged consecutively in the row direction belong, just like the group of pixels described above. In each group **3g** of output terminals, two arbitrary adjacent output terminals **3a** output grayscale voltages of opposite polarities. Also, in two arbitrary ones of the groups **3g** of output terminals that are adjacent to each other in the row direction, two output terminals **3a** at the same position output grayscale voltages of opposite polarities. Even by adopting such an arrangement, an inversion drive that can avoid casting horizontal shadows can also be carried out as with the arrangement shown in FIG. **4.**

## INDUSTRIAL APPLICABILITY

The present invention improves the display quality of a liquid crystal display device, of which each picture element is defined by an even number of pixels, and can be used effectively in a multi-primary-color liquid crystal display device.

## REFERENCE SIGNS LIST

| | |
|---|---|
| **1** | LCD panel |
| **2** | scan line driver (gate driver) |
| **3** | signal line driver (source driver) |
| **3a** | output terminal |
| **3g** | group of output terminals |
| **10** | active-matrix substrate |
| **10a, 20a** | transparent substrate |
| **11** | pixel electrode |
| **11a** | notch |
| **11A, 11B** | subpixel electrode |
| **12** | scan line |
| **13** | signal line |
| **13p** | pair of signal lines |

| 14, 14A, 14B | thin-film transistor (TFT) |
| 15, 15A, 15B | storage capacitor line |
| 15a | storage capacitor counter electrode |
| 16 | gate insulating film |
| 17 | storage capacitor electrode |
| 18 | interlayer insulating film |
| 19, 29 | alignment film |
| 20 | counter substrate |
| 21 | counter electrode |
| 29 | alignment film |
| 30 | liquid crystal layer |
| 41 | shield electrode |
| 100, 200, 300 | liquid crystal display device |
| 400A, 400B, 400C | liquid crystal display device |
| P | picture element |
| R | red pixel |
| G | green pixel |
| B | blue pixel |
| Y | yellow pixel |
| C | cyan pixel |
| M | magenta pixel |
| W | white pixel |
| sp1, sp2 | subpixel |
| Re1 | sequential connection region |
| Re2 | reverse connection region |

**Claims**

1. A liquid crystal display device that has a number of pixels, which are arranged in columns and rows to form a matrix pattern, the device comprising:

an active-matrix substrate that includes pixel electrodes, each of which is provided for an associated one of the pixels, a plurality of scan lines that run in a row direction, and a plurality of signal lines that run in a column direction;

a counter substrate that faces the active-matrix substrate;

a liquid crystal layer that is interposed between the active-matrix substrate and the counter substrate; and

a signal line driver that applies a positive or negative grayscale voltage as a display signal to each said signal line,

wherein those pixels include m kinds of (where m is an even number that is equal to or greater than four) pixels that display mutually different colors, and

wherein the pixels are arranged so that n out of the m kinds of pixels (where n is an even number that is equal to or smaller than m and is a divisor of m) are repeatedly arranged in the same order in the row direction, and

wherein each of the rows of pixels that are formed by those pixels includes multiple groups of pixels, to each of which n pixels that are arranged consecutively in the row direction belong, grayscale voltages of mutually opposite polarities being applied through associated signal lines to the pixel electrodes of two arbitrary pixels that are adjacent to each other in each said group of pixels, and

wherein in two arbitrary ones of those groups of pixels that are adjacent to each other in the row direction, grayscale voltages of mutually opposite polarities are applied through their associated signal lines to the pixel electrodes of pixels that display the same color, and

wherein the signal lines include at least one pair of signal lines that are adjacent to each other and that supply grayscale voltages of the same polarity, and

wherein the source-drain capacitance of the pixels that are located between the pair of signal lines is smaller than the source-drain capacitance of the other pixels.

2. The liquid crystal display device of claim 1, wherein when viewed along a normal to a display screen, each said pixel electrode and its associated two adjacent signal lines overlap with each other, and

wherein the area where the pixel electrodes of the pixels that are located between the pair of signal lines and the two signal lines that are adjacent to those pixels overlap with each other is smaller than the area where the pixel electrodes of the other pixels and the two signal lines that are adjacent to those pixels overlap with each other.

3. The liquid crystal display device of claim 2, wherein the pixel electrode of each of the pixels that are located between the pair of signal lines has notches.

4. The liquid crystal display device of claim 1, wherein when viewed along a normal to a display screen, each said pixel electrode and its associated two adjacent signal lines do not overlap with each other, and

wherein the distance from the pixel electrodes of the pixels that are located between the pair of signal lines to the two signal lines that are adjacent to those pixel electrodes is longer than the distance from the pixel electrodes of the other pixels to the two signal lines that are adjacent to those pixel electrodes.

5. The liquid crystal display device of claim 1, wherein the active-matrix substrate further includes shield electrodes, which are arranged in the vicinity of edges of the pixel electrode of each said pixel that is located between the pair of signal lines and which are supplied with a different voltage from the grayscale voltage applied to the pixel electrode.

6. The liquid crystal display device of one of claims 1 to 5, wherein the pixels include red, green and blue pixels representing the colors red, green and blue, respectively.

7. The liquid crystal display device of claim 6, wherein the pixels further include yellow pixels representing the color yellow.

8. The liquid crystal display device of claim 6 or 7, wherein the pixels that are located between the pair of signal lines are the blue pixels.

9. The liquid crystal display device of one of claims 1 to 8, wherein m=n, and

wherein the pixels are arranged so that the m kinds of pixels are repeatedly arranged in the same order in the row direction.

10. The liquid crystal display device of claim 9, wherein each said group of pixels forms one picture element.

11. The liquid crystal display device of one of claims 1 to 10, wherein the signal line driver includes a plurality of output terminals that are arranged in the row direction, and

wherein two arbitrary adjacent ones of the output terminals output grayscale voltages of opposite polarities.

12. The liquid crystal display device of claim 11, comprising connection regions where each of the signal lines is connected to an associated one of the output terminals one to one,
wherein the connection regions include a sequential connection region where an $i^{th}$ signal line (where i is a natural number) and an $i^{th}$ output terminal are connected together and reverse connection regions where a $j^{th}$ signal line (where j is a different natural number from i) and a $(j+1)^{th}$ output terminal are connected together and where a $(j+1)^{th}$ signal line and a $j^{th}$ output terminal are connected together.

13. The liquid crystal display device of one of claims 1 to 10, wherein the signal line driver includes a plurality of output terminals that are arranged in the row direction, and
wherein the output terminals include multiple groups of output terminals, each said group including n output terminals that are arranged consecutively in the row direction, and
wherein in each said group of output terminals, two arbitrary adjacent ones of the output terminals output grayscale voltages of opposite polarities, and
wherein in two arbitrary ones of the groups of output terminals that are adjacent to each other in the row direction, two output terminals at the same position output grayscale voltages of opposite polarities.

*FIG.1*

100

3

| SIGNAL LINE DRIVER |

1

| SCAN LINE DRIVER | LCD PANEL |

2

*FIG.2*

## FIG.3

## FIG.4

## FIG.5

(a)

SOURCE SIGNAL ⟂ Vspp

DRAIN VOLTAGE ↓ ΔV

(b)

ITS OWN SOURCE SIGNAL

OTHERS' SOURCE SIGNAL

## FIG.6

100

− + − − +

12

11

11a    11a

11

R    G    B    Y

15a

15

17

13

13

12

14

13    13

13p

## FIG.7

FIG.8

*FIG.9*

200

− + − − +

R G B Y

12

11

11

41

15a

15

17

13

12

14

13 13

13p

13

*FIG.10*

*FIG.11*

(a)

G   D2 ⟷ [13] ⟷ D1   B   11

11

13

(b)

B   D1 ⟷ [13] ⟷ D2   Y   11

11

13

*FIG.12*

*FIG.13*

*FIG.14*

400C

*FIG.15*

(a)

G      D2    D1    B

11(11A)

11(11A)                13

(b)

B      D1    D2    Y

11(11A)

11(11A)                13

## FIG.16

FIG.17

FIG.18

*FIG.19*

*FIG.20*

*FIG.21*

*FIG.22*

*FIG.23*

*FIG.24*

| R + | G − | B + | R − | G + | B − | R + | G − | B + |
|---|---|---|---|---|---|---|---|---|
| R − | G + | B − | R + | G − | B + | R − | G + | B − |
| R + | G − | B + | R − | G + | B − | R + | G − | B + |
| R − | G + | B − | R + | G − | B + | R − | G + | B − |
| R + | G − | B + | R − | G + | B − | R + | G − | B + |
| R − | G + | B − | R + | G − | B + | R − | G + | B − |

*FIG.25*

| R + | G − | Y + | B − | R + | G − | Y + | B − | R + | G − | Y + | B − |
|---|---|---|---|---|---|---|---|---|---|---|---|
| R − | G + | Y − | B + | R − | G + | Y − | B + | R − | G + | Y − | B + |
| R + | G − | Y + | B − | R + | G − | Y + | B − | R + | G − | Y + | B − |
| R − | G + | Y − | B + | R − | G + | Y − | B + | R − | G + | Y − | B + |
| R + | G − | Y + | B − | R + | G − | Y + | B − | R + | G − | Y + | B − |
| R − | G + | Y − | B + | R − | G + | Y − | B + | R − | G + | Y − | B + |

*FIG.26*

| R + | G − | B + | W − | R + | G − | B + | W − | R + | G − | B + | W − |
|---|---|---|---|---|---|---|---|---|---|---|---|
| R − | G + | B − | W + | R − | G + | B − | W + | R − | G + | B − | W + |
| R + | G − | B + | W − | R + | G − | B + | W − | R + | G − | B + | W − |
| R − | G + | B − | W + | R − | G + | B − | W + | R − | G + | B − | W + |
| R + | G − | B + | W − | R + | G − | B + | W − | R + | G − | B + | W − |
| R − | G + | B − | W + | R − | G + | B − | W + | R − | G + | B − | W + |

*FIG.27*

(a)

BG

WD

SD

(b)

15

13

12

21

11

15a

CLC

CCS

7

14

(c)

RIPPLE VOLTAGE →

CS VOLTAGE

$V\alpha$

GATE VOLTAGE

(d)

CS VOLTAGE

RIPPLE VOLTAGE →

$V\alpha$

GATE VOLTAGE

*FIG.28*

## INTERNATIONAL SEARCH REPORT

| | International application No. |
|---|---|
| | PCT/JP2010/064609 |

### A. CLASSIFICATION OF SUBJECT MATTER

*G02F1/1368*(2006.01)i, *G02F1/133*(2006.01)i, *G02F1/1335*(2006.01)i, *G02F1/1343*(2006.01)i, *G09G3/20*(2006.01)i, *G09G3/36*(2006.01)i

According to International Patent Classification (IPC) or to both national classification and IPC

### B. FIELDS SEARCHED

Minimum documentation searched (classification system followed by classification symbols)

G02F1/1368, G02F1/133, G02F1/1335, G02F1/1343, G09G3/20, G09G3/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2007/063620 A1 (Sharp Corp.), 07 June 2007 (07.06.2007), entire text; all drawings & US 2009/0040243 A1 & CN 101317212 A | 1-13 |
| A | WO 2007/119454 A1 (Sharp Corp.), 25 October 2007 (25.10.2007), entire text; all drawings & US 2009/0290080 A1 & CN 101410882 A | 1-13 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 October, 2010 (18.10.10) | 26 October, 2010 (26.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004529396 PCT
- JP 11295717 A
- JP 2007063620 PCT
- JP 2001281696 A